# EUROPÄISCHE PATENTSCHRIFT

(11) **EP 3 010 986 B1**
(45) Veröffentlichungstag und Bekanntmachung des Hinweises auf die Patenterteilung: **23.09.2020**
(21) Anmeldenummer: 14728831.0
(22) Anmeldetag: 30.05.2014
(51) Int. Cl.: C09D 183/02

(54) **VERFAHREN ZUR HERSTELLUNG EINER WÄSSRIGEN ZUSAMMENSTZUNG UMFASSEND EIN KONDENSAT AUF BASIS VON SILICIUM-VERBINDUNGEN ZUR HERSTELLUNG VON ANTIREFLEXIONSBESCHICHTUNGEN**
METHOD FOR PRODUCING AN AQUEOUS COMPOSITION COMPRISING A CONDENSATE BASED ON SILICON COMPOUNDS FOR PRODUCING ANTIREFLECTIVE COATINGS
PROCÉDÉ DE PRODUCTION D'UNE COMPOSITION AQUEUSE COMPORTANT UN CONDENSAT À BASE DE COMPOSÉS DU SILICIUM POUR LA FABRICATION DE COUCHES ANTI-RÉFLÉCHISSANTES

(30) Priorität: 18.06.2013 DE 102013010105
(43) Veröffentlichungstag der Anmeldung: 27.04.2016
(73) Patentinhaber: Ferro GmbH, 60327 Frankfurt (DE)
(72) Erfinder: FRITSCHE, Klaus-Dieter, 04680 Colditz (DE); TÜNKER, Gerhard, 63150 Heusenstamm (DE)
(74) Vertreter: Reinhardt, Markus
(86) Internationale Anmeldenummer: PCT/EP2014/001464
(87) Internationale Veröffentlichungsnummer: WO 2014/202181

(56) Entgegenhaltungen:
- WO-A1-2008/145253
- DE-A1- 2 721 829

## Beschreibung

Die vorliegende Erfindung betrifft Verfahren zur Herstellung einer wässrigen Zusammensetzung umfassend ein Kondensat auf Basis von Silicium-Verbindungen sowie eine Zusammensetzung erhältlich gemäß dem vorliegenden Verfahren. Die Zusammensetzung kann insbesondere zur Herstellung von Antireflexionsbeschichtungen eingesetzt werden.

Beim Durchgang von Licht durch die Grenzfläche zweier Medien mit unterschiedlichem Brechungsindex wird ein Teil der Strahlung reflektiert. Beim senkrechten Einfall von Licht auf eine Glasscheibe mit dem Brechungsindex n = 1,5 beträgt der reflektierte Anteil insgesamt ca. 8%. Fällt das Licht schräg auf die Grenzfläche, wird in der Regel ein weitaus größerer Anteil reflektiert. Für viele Anwendungen ist eine hohe Reflexion unerwünscht, da diese zu einer Abnahme der Transmission führt.

Daher wurden Versuche unternommen diese Reflexion zu vermindern. Beispielsweise wurden Oberflächen mit einer hochporösen Beschichtung versehen, um dieses Ziel zu erreichen. Derartige Beschichtungen sind beispielsweise in DE 196 42 419 A1, DE 199 18 811 A1, DE 10 2004 027842 A1, DE 10 2006 001078 A1, WO 03/027034 A2, DE 100 51 724 A1, DE 100 51 725 A1 und WO 2008/145253 A1 dargelegt.

Die Druckschrift DE 196 42 419 A1 beschreibt die Verwendung von spezifischen Polymeren zur Herstellung von Zusammensetzungen, mit denen Antireflexionsbeschichtungen erhältlich sind, die jedoch große Mengen an organischen Lösungsmitteln enthalten.

In dem Dokument DE 199 18 811 A1 werden ebenfalls Zusammensetzungen dargelegt, die spezielle Polymere enthalten, um eine Antireflexionsbeschichtung herzustellen. Insbesondere können die Zusammensetzungen eingesetzt werden, um Sicherheitsgläser zu beschichten.

Die in der Offenlegungsschrift DE 10 2004 027842 A1 beschriebenen Antireflexionsschichten weisen einen hohen Anteil an MgF₂ auf. Nachteilig ist hierbei insbesondere der Preis von MgF₂. Darüber hinaus kann bei unsachgemäßer Entsorgung der beschichteten Substrate unweltschädliche und giftige Flusssäure (HF) entstehen.

Eine mehrschichtige Antireflexionsbeschichtung wird in DE 10 2006 001078 A1 dargelegt, wobei die Beschichtung eine dichte und eine poröse Schicht aufweist. Die dichte Schicht umfasst im Allgemeinen Fluoride, so dass diese Beschichtung die zuvor dargelegten Nachteile aufweist. Zwar wird beschrieben, dass die poröse Schicht durch "Bar-Coating-Verfahren" aufgetragen werden kann. Allerdings findet sich in dieser Druckschrift kein konkretes Ausführungsbeispiel hierfür. Polymere werden zur Herstellung der Zusammensetzungen nicht eingesetzt.

Die Offenlegungsschrift WO 03/027034 A2 beschreibt Antireflexionsbeschichtungen, die eine besonders hohe mechanische Stabilität aufweisen. Diese Eigenschaft wird durch die Verwendung von SiO₂-Partikeln mit einer bestimmten Partikelgrößenverteilung erzielt.

Weiterhin offenbaren die Druckschriften DE 100 51 724 A1 und EP 0 130 801 A1 Beschichtungslösungen zur Herstellung von Antireflexionsschichten. Darüber hinaus legt die Veröffentlichung DE 100 51 725 A1 Zusammensetzungen zur Herstellung von Antireflexionsschichten dar, die einen hohen Anteil an Tensiden aufweisen.

Siebdruckfähige SiO₂-Sole, die zur Herstellung von Antireflexionsbeschichtungen geeignet sind, werden beispielsweise in WO 2008/145253 A1 dargelegt.

Die zuvor dargelegten Druckschriften lehren, dass die Verwendung von organischen Lösungsmitteln notwendig ist, wobei sich zumindest in den Beispielen keine Ausführungsform findet, in der nicht hohe Anteile an diesen Lösungsmitteln eingesetzt wird.

Nachteilig ist hierbei, dass durch den hohen Anteil an organischen Lösungsmitteln viele Sicherheitsmaßnahmen notwendig sind, so dass die Verarbeitung der Beschichtungszusammensetzungen mit einem hohen Aufwand verbunden ist. So sind die Zusammensetzungen, je nach Art und Anteil der organischen Lösungsmittel brennbar. Problematisch sind insbesondere Lösungsmitteldämpfe, die entzündlich oder explosiv sein können. Ferner kann das organische Lösungsmittel zu einer Geruchsbelästigung führen, so dass Filteranlagen notwendig sind. Weiterhin werden die Lösungsmittel teilweise zurückgewonnen oder wiederverwendet. Diese Vorgehensweise ist ebenfalls mit Kosten verbunden.

Beschichtungszusammensetzungen, die ohne die Verwendung von organischen Lösungsmitteln erhalten werden können, sind unter anderem in den Druckschriften DE 40 20 316 A1, DE 196 49 953 A1 und EP 0 675 128 A1 beschrieben. Allerdings eignen sich diese Beschichtungszusammensetzungen nicht zur Herstellung von Antireflexbeschichtungen. Weiterhin werden hierfür relativ teure wassermischbare Siliciumverbindungen benötigt.

In Anbetracht des Standes der Technik ist es nun Aufgabe der vorliegenden Erfindung ein Verfahren zur Herstellung einer wässrigen Zusammensetzung umfassend ein Kondensat auf Basis von Silicium-Verbindungen zur Verfügung zu stellen, mit denen besonders einfach und kostengünstig Zusammensetzungen erhältlich sind, durch die Antireflexionsschichten auf Substraten, insbesondere anorganischen Substraten erhalten werden können. Insbesondere sollte das Verfahren zur Beschichtung von Substraten ohne aufwendige Sicherheitsmaßnahmen durchgeführt werden können, wobei nach Möglichkeit eine nichtbrennbare Zusammensetzung eingesetzt werden sollte. Eine weitere Aufgabe bestand darin Zusammensetzungen zur Herstellung von Antireflexionsschichten bereitzustellen, die in Beschichtungen mit einer besonders hohen Haftfestigkeit und mechanischen Stabilität überführt werden können. Ferner sollte das Verfahren zur Herstellung der Zusammensetzung ohne aufwendige Nachbehandlung und Aufreinigung der erhaltenen Reaktionsmischung durchgeführt werden können.

Gelöst werden diese sowie weitere nicht explizit genannte Aufgaben, die jedoch aus den hierin einleitend diskutierten Zusammenhängen ohne weiteres ableitbar oder erschließbar sind, durch ein Verfahren mit allen Merkmalen des Patentanspruchs 1. Zweckmäßige Abwandlungen des erfindungsgemäßen Verfahrens werden in Unteransprüchen 2 bis 9 unter Schutz gestellt. Hinsichtlich der Zusammensetzung stellt der Gegenstand des Anspruchs 10 eine Lösung der zugrunde liegenden Aufgabe bereit.

Gegenstand der vorliegenden Erfindung ist ein Verfahren zur Herstellung einer wässrigen Zusammensetzung, enthaltend ein Kondensat auf Basis von Silicium-Verbindungen, umfassend die Schritte:
i) Einbringen zumindest eines polymeren Rheologie-Steuerungsmittels in Wasser;
ii) Zugabe zumindest eines sauren Katalysators;
iii) Zugabe zumindest einer Silicium-Verbindung der allgemeinen Formel (I)

   RₙSiX₄₋ₙ (I),

   in der die Reste X gleich oder verschieden sind und hydrolysierbare Gruppen oder Hydroxylgruppen bedeuten, die Reste R gleich oder verschieden sind und nicht hydrolysierbare Gruppen bedeuten und n 0, 1, 2 oder 3 ist; und
iv) Umsetzung zumindest eines Teils der in Schritt iii) zugegebenen Silicium-Verbindungen der allgemeinen Formel (I) in einer Hydrolysereaktion,
wobei die Menge an Silicium-Verbindungen der allgemeinen Formel (I) im Bereich von 0,1 Gew.-% bis 5 Gew.-% beträgt, bezogen auf die in Schritt iii) erhaltene Mischung, und die in Schritt iii) erhaltene Mischung 70 Gew.-% bis 99,79 Gew.-% Wasser umfasst.

Hierdurch kann überraschend auf besonders einfache und wirtschaftliche Weise eine Zusammensetzung erhalten werden, die zur Herstellung von Antireflexionsbeschichtungen eingesetzt werden kann. Hierbei kann die Zusammensetzung im Wesentlichen ohne aufwendige Sicherheitsmaßnahmen auf ein Substrat getragen werden. Weiterhin kann bei der Verwendung der Zusammensetzung auf teure Brandschutzmaßnahmen verzichtet werden.

Ferner kann das Verfahren zur Herstellung der Zusammensetzung ohne kostspielige Aufreinigung oder Nachbehandlung der Reaktionsmischung durchgeführt werden.

Die durch die erfindungsgemäßen Zusammensetzungen erhältlichen Beschichtungen zeigen eine hohe mechanische Stabilität und eine hohe Haftfestigkeit auf vielen Substraten. Des Weiteren können die erfindungsgemäßen Zusammensetzungen kostengünstig und umweltfreundlich hergestellt und verarbeitet werden. Die beschichteten Substrate weisen hierbei eine überraschend hohe Transparenz auf.

In Schritt i) des erfindungsgemäßen Verfahrens wird zumindest ein polymeres Rheologie-Steuerungsmittel in Wasser eingebracht. Rheologie-Steuerungsmittel im Sinne der vorliegenden Erfindung sind Verbindungen, die eine starke Viskositätsbeeinflussung der Zusammensetzung bewirken. Durch die Verwendung von Rheologie-Steuerungsmittel kann überraschend die Bildung stark kondensierter großer geflockter Kieselsäuren verhindert werden. Bevorzugte Rheologie-Steuerungsmittel können ab einer Temperatur von ca. 500°C vollständig verbrannt werden.

Vorzugsweise liegt das Molekulargewicht des Rheologie-Steuerungsmittels im Bereich von 50000 g/mol bis 20000000 g/mol, besonders bevorzugt im Bereich von 100000 g/mol bis werden. Bevorzugte Rheologie-Steuerungsmittel können ab einer Temperatur von ca. 500°C vollständig verbrannt werden.

Vorzugsweise liegt das Molekulargewicht des Rheologie-Steuerungsmittels im Bereich von 50000 g/mol bis 20000000 g/mol, besonders bevorzugt im Bereich von 100000 g/mol bis 2000000 g/mol und speziell bevorzugt 200000 g/mol bis 1000000 g/mol. Das Molekulargewicht bezieht sich hierbei auf das Gewichtsmittel und kann beispielsweise über Gel-Permeations-Chromatographie (GPC) bestimmt werden.

Bevorzugte Rheologie-Steuerungsmittel umfassen Hydroxygruppen. Gemäß einem besonderen Aspekt können als Rheologie-Steuerungsmittel insbesondere Cellulose, Cellulosederivate, besonders bevorzugt Celluloseether und/oder Celluloseester eingesetzt werden. Hierzu gehören insbesondere Hydroxypropylmethylcellulosen.

Weiterhin können Polyacrylsäuren, Polyvinylalkohole und Polyacrylamide als bevorzugte Rheologie-Steuerungsmittel eingesetzt werden, wobei die zuvor dargelegten Cellulosen und/oder Cellulosederivate gegenüber den Polyacrylamiden bevorzugt sind.

Die Menge an Rheologie-Steuerungsmittel liegt vorzugsweise im Bereich von 0,1 Gew.-% bis 15 Gew.-%, besonders bevorzugt im Bereich von 0,5 Gew.-% bis 15 Gew.-% und speziell bevorzugt 1 Gew.-% bis 5 Gew.-%, bezogen auf das Gewicht der in Schritt i) erhaltenen Mischung.

Das in Schritt i) eingesetzte Wasser eine Reinheit aufweisen sollte, die einer nachfolgenden Verwendung der erhaltenen Zusammensetzung nicht entgegensteht. Die in Schritt i) erhaltene Mischung umfasst 70 Gew.-% bis 99,9 Gew.-%, besonders bevorzugt im Bereich von 85 Gew.-% bis 99,5 Gew.-% und speziell bevorzugt 95 Gew.-% bis 99 Gew.-% Wasser, bezogen auf das Gewicht der in Schritt i) erhaltenen Mischung.

Das Einbringen des polymeren Rheologie-Steuerungsmittels in das Wasser kann auf jede übliche Weise erfolgen. Beispielsweise kann das Rheologie-Steuerungsmittel als Feststoff oder als wässrige Lösung in Wasser gegeben werden. Weiterhin kann Wasser zu dem Rheologie-Steuerungsmittel zugegeben werden. Hierbei kann die erhaltene Mischung beispielswese durch mechanische Einwirkung vermischt werden. Die Temperatur dieses Mischschrittes kann beispielsweise im Bereich von 0°C bis 100°C, vorzugsweise 10 bis 60°C liegen, ohne dass hierdurch eine Begrenzung erfolgen soll.

Erfindungsgemäß wird in Schritt ii) ein saurer Katalysator zugegeben. Diese Zugabe kann vorzugsweise in die in Schritt i) erhaltene Mischung erfolgen. Weiterhin kann der saure Katalysator auch in das in Schritt i) eingesetzte Wasser und/oder zu dem in Schritt i) eingesetzten Rheologie-Steuerungsmittel gegeben werden.

Saure Katalysatoren sind in der Fachwelt weithin bekannt, wobei beispielsweise organische und/oder anorganische Säuren verwendet werden können. Zu den bevorzugten Säuren gehören unter anderem Essigsäure, Oxalsäure, Salzsäure (HCl), Schwefelsäure (H₂SO₄), Phosphorsäure (H₃PO₄) und/oder Salpetersäure (HNO₃).

Die Menge an saurem Katalysator ist von der Art des Katalysators und von der angestrebten Reaktionsgeschwindigkeit der in Schritt iv) durchzuführenden Hydrolysereaktion abhängig.

Überraschende Vorteile lassen sich durch Mengen an saurem Katalysator im Bereich bevorzugt von 0,01 bis 5 Gew.-%, vorzugsweise 0,05 bis 4 Gew.-%, besonders bevorzugt 0,1 bis 3 Gew.-% und speziell bevorzugt 0,2 bis 1 Gew.-%, bezogen auf die in Schritt ii) erhaltene Mischung.

Die in Schritt ii) erhaltene Mischung umfasst vorzugsweise 70 Gew.-% bis 99,89 Gew.-%, besonders bevorzugt im Bereich von 80 Gew.-% bis 99,45 Gew.-% und speziell bevorzugt 95 Gew.-% bis 99 Gew.-% Wasser.

Die Menge an Rheologie-Steuerungsmittel liegt vorzugsweise im Bereich von 0,1 Gew.-% bis 15 Gew.-%, besonders bevorzugt im Bereich von 0,5 Gew.-% bis 15 Gew.-% und speziell bevorzugt 1 Gew.-% bis 5 Gew.-%, bezogen auf das Gewicht der in Schritt ii) erhaltenen Mischung.

In Schritt iii) des vorliegenden Verfahrens wird eine Silicium-Verbindungen der allgemeinen Formel

RₙSiX₄₋ₙ (I),

in der die Reste X gleich oder verschieden sind und hydrolysierbare Gruppen oder Hydroxylgruppen bedeuten, die Reste R gleich oder verschieden sind und nicht hydrolysierbare Gruppen bedeuten und n 0, 1, 2 oder 3 ist, zugegeben.

Hierbei kann die Silicium-Verbindungen der allgemeinen Formel (I) der in Schritt i) und/oder Schritt ii) erhaltenen Mischung und/oder einem der eingesetzten Edukte, beispielsweise dem eingesetzten Wasser, dem Rheologie-Steuerungsmittel und/oder dem sauren Katalysator zugegebenen werden. Überraschende Vorteile können durch die Zugabe in die in Schritt i) oder Schritt ii) erhaltenen Mischung erzielt werden, wobei eine Zugabe in die in Schritt ii) erhaltene Mischung besonders bevorzugt ist.

Bei den Silicium-Verbindungen der Formel I sind die hydrolysierbaren Gruppen X beispielsweise Wasserstoff oder Halogen, vorzugsweise F, Cl, Br oder I; Alkoxy, vorzugsweise C₁₋₆-Alkoxy, wie z. B. Methoxy, Ethoxy, n-Propoxy, i-Propoxy und Butoxy; Aryloxy, vorzugsweise C₆₋₁₀-Aryloxy, wie z. B. Phenoxy; Acyloxy; vorzugsweise C₁₋₆-Acyloxy, wie z. B. Acetoxy oder Propionyloxy; Alkylcarbonyl, vorzugsweise C₂₋₇-Alkylcarbonyl, wie z. B. Acetyl; Amino, Monoalkylamino oder Dialkylamino mit vorzugsweise 1 bis 12, insbesondere 1 bis 6 Kohlenstoffatomen.

In Formel I bedeutet R einen nicht hydrolysierbaren organischen Rest, der gegebenenfalls eine funktionelle Gruppe tragen kann. Beispiele für R sind Alkyl, vorzugsweise C₁₋₆-Alkyl, wie Methyl, Ethyl, n-Propyl, Isopropyl, n-Butyl, s-Butyl und t-Butyl, Pentyl, Hexyl oder Cyclohexyl; Alkenyl, vorzugsweise C_{2_6}-Alkenyl, wie z. B. Vinyl, 1-Propenyl, 2-Propenyl und Butenyl; Alkinyl, vorzugsweise C₂₋₆-Alkinyl, wie z. B. Acetylenyl und Propargyl; und Aryl, vorzugsweise C₆₋₁₀-Aryl, wie z. B. Phenyl und Naphthyl.

Spezielle Beispiele funktionelle Gruppen des Restes R sind die Epoxy-, Hydroxy-, Ether-, Amino-, Monoalkylamino-, Dialkylamino-, Amid-, Carboxy-, Mercapto, Thio-ether-, Vinyl-, Acryloxy-, Methacryloxy-, Cyano-, Halogen-, Aldehyd-, Alkylcarbonyl-, Sulfonsäure- und Phosphorsäuregruppe. Diese funktionellen Gruppen sind über Alkylen-, Alkenylen- oder Arylen-Brückengruppen, die durch Sauerstoff- oder Schwefelatome oder NH-Gruppen unterbrochen sein können, an das Siliciumatom gebunden. Die genannten Brückengruppen leiten sich z. B. von den oben genannten Alkyl-, Alkenyl- oder Arylresten ab. Die Reste R enthalten vorzugsweise 1 bis 18, insbesondere 1 bis 8 Kohlenstoffatome. Die genannten Reste R und X können gegebenenfalls einen oder mehrere übliche Substituenten, wie z. B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂, aufweisen.

Die Silicium-Verbindungen der allgemeinen Formel I sind über die Reste X hydrolysierbar und kondensierbar. Über diese hydrolytisch kondensierbaren Gruppen wird ein anorganisches Netzwerk mit Si-O-Si-Einheiten aufgebaut. Die Reste R sind unter den üblichen Kondensationsbedingungen im Gegensatz zu den Resten X gegenüber einer Hydrolyse stabil.

In einer bevorzugten Ausführungsform werden zur Herstellung des Kondensats Silicium-Verbindungen der allgemeinen Formel SiX₄, in der die Reste X gleich oder verschieden sind und hydrolysierbare Gruppen oder Hydroxylgruppen bedeuten, eingesetzt. Ohne Einschränkung der Allgemeinheit sind konkrete Beispiele für derartige Silicium-Verbindungen SiCl₄, HSiCl₃, Si(OCH₃)₄, Si(OOCCH₃)₄, Si(OC₂H₅)₄ und Si(OC₃H₇)₄, wobei Tetraalkoxysilane, beispielsweise Si(OCH₃)₄ (TMOS), Si(OCH₂CH₃)₄ (TEOS) oder Si(OC₃H₇)₄ besonders bevorzugt sind. Die genannten Verbindungen können einzeln oder als Mischung eingesetzt werden. Der Anteil an Silicium-Verbindungen der allgemeinen Formel SiX₄ liegt vorzugsweise im Bereich von 0 Gew.-% bis 100 Gew.-% besonders bevorzugt im Bereich von 40 Gew.-% bis 100 Gew.-% und speziell bevorzugt 80 bis 100 Gew.-%, bezogen auf die Gesamtmenge an monomeren Silicium-Verbindungen. Gemäß einer besonders bevorzugten Varianten der vorliegenden Erfindung werden im Wesentlichen nur Verbindungen der allgemeinen Formel SiX₄ in Schritt iii) als Silicium-Verbindungen eingesetzt. Durch die Verwendung von hohen Anteilen an Silicium-Verbindungen der allgemeinen Formel SiX₄ die Brennzeiten relativ kurz gehalten werden. Weiterhin können durch die Verwendung von hohen Anteilen an Silicium-Verbindungen der allgemeinen Formel SiX₄ auf besonders einfache und kostengünstige Weise sehr haftfeste Beschichtungen auf Substraten erhalten werden, die eine ausgezeichnete optische Qualität haben.

Gemäß einem weiteren Aspekt der vorliegenden Erfindung kann zur Herstellung des Kondensats vorzugsweise eine Mischung von Silanen eingesetzt werden, die mindestens eine Silicium-Verbindung der Formel RSiX₃ umfasst, in der die Reste X gleich oder verschieden sind und hydrolysierbare Gruppen oder Hydroxylgruppen bedeuten und der Rest R eine nicht hydrolysierbare Gruppen bedeutet. Ohne Einschränkung der allgemeinen Lehre sind konkrete Beispiele für derartige Silicium-Verbindungen Cl₃SiCH₃, Si(CH₃)(OC₂H₅)₃, Cl₃Si(C₂H₅), Si(C₂H₅)(OC₂H₅)₃, Si(OC₂H₅)₃(CH₂-CH=CH₂), Si(OOCCH₃)₃(CH₂-CH=CH₂), Cl₃Si(CH=CH₂), Si(CH=CH₂)(OC₂H₅)₃, Si(CH=CH₂)(OC₂H₄OCH₃)₃ und Si(CH=CH₂)(OOCCH₃)₃. Die genannten Verbindungen können einzeln oder als Mischung eingesetzt werden. Der Anteil an Silicium-Verbindungen der allgemeinen Formel RSiX₃ beträgt vorzugsweise höchstens 80 Gew.-%, besonders bevorzugt höchstens 10 Gew.-% bezogen auf die Gesamtmenge an monomeren Silicium-Verbindungen.

Weiterhin kann das Kondensat durch Kondensation einer Mischung erhalten werden, die mindestens eine Silicium-Verbindung der Formel R₂SiX₂ umfasst, in der die Reste X gleich oder verschieden sind und hydrolysierbare Gruppen oder Hydroxylgruppen bedeuten und die Reste R gleich oder verschieden sind und nicht hydrolysierbare Gruppen bedeuten. Ohne Einschränkung der allgemeinen Lehre sind konkrete Beispiele für derartige Silicium-Verbindungen Cl₂Si(CH₃)₂, Si(CH₃)₂(OC₂H₅)₂, Si(C₂H₅)₂(OC₂H₅)₂, Cl₂Si(CH=CH₂)(CH₃), Si(CH₃)₂(OCH₃)₂, Cl₂Si(C₆H₅)₂, und Si(C₆H₅)₂(OC₂H₅)₂. Die genannten Verbindungen können einzeln oder als Mischung eingesetzt werden. Der Anteil an Silicium-Verbindungen der allgemeinen Formel R₂SiX₂ beträgt vorzugsweise höchstens 20 Gew.-%, besonders bevorzugt höchstens 10 Gew.-% bezogen auf die Gesamtmenge an monomeren Silicium-Verbindungen.

Darüber hinaus kann das Kondensat durch Kondensation einer Mischung erhalten werden, die mindestens eine Silicium-Verbindung der Formel R₃SiX umfasst, in der der Rest X eine hydrolysierbare Gruppe oder eine Hydroxylgruppe bedeutet und die Reste R gleich oder verschieden sind und nicht hydrolysierbare Gruppen bedeuten. Ohne Einschränkung der allgemeinen Lehre sind konkrete Beispiele für derartige Silicium-Verbindungen (C₆H₅)₃SiOH, Si(CH₃)₃(OC₂H₅) und Si(CH₂CH₃)₃(OC₂H₅). Die genannten Verbindungen können einzeln oder als Mischung eingesetzt werden. Der Anteil an Silicium-Verbindungen der allgemeinen Formel R₃SiX beträgt vorzugsweise höchstens 20 Gew.-%, besonders bevorzugt höchstens 10 Gew.-% bezogen auf die Gesamtmenge an monomeren Silicium-Verbindungen.

Silane der allgemeinen Formel (I) sind entweder käuflich erwerbbar oder nach Methoden herstellbar wie in "Chemie und Technologie der Silicone" (W. Noll, Verlag Chemie, Weinheim/Bergstraße, 1968) beschrieben. Sie können entweder als solche oder in vorkondensierter Form eingesetzt werden.

Die Menge an Silicium-Verbindungen der allgemeinen Formel (I) liegt im Bereich von 0,1 Gew.-% bis 5 Gew.-%, besonders bevorzugt im Bereich von 0,5 Gew.-% bis 5 Gew.-% und speziell bevorzugt 1 Gew.-% bis 5 Gew.-%, bezogen auf die in Schritt iii) erhaltene Mischung.

Ferner kann vorgesehen sein, dass zur Herstellung des Kondensats Saatteilchen eingesetzt werden. Bevorzugte Saatteilchen können einen mittleren Partikeldurchmesser im Bereich von 1 bis 100 nm, vorzugsweise im Bereich von 3 bis 80 nm, besonders bevorzugt im Bereich von 5 bis 50 nm aufweisen. Der mittlere Partikeldurchmesser bezieht sich hierbei auf das Zahlenmittel und kann beispielsweise über mikroskopische Methoden ermittelt werden. Die Saatteilchen umfassen vorzugsweise SiO₂, wobei der Gewichtsanteil an SiO₂ bevorzugt mindestens 50 Gew.-%, besonders bevorzugt mindestens 80 Gew.-% beträgt, bezogen auf das Gesamtgewicht der Saatteilchen.

Der Anteil an Saatteilchen kann vorzugsweise im Bereich von 0,01 bis 20 Gew.-%, bevorzugt im Bereich von 0,1 bis 10 Gew.-%,besonders bevorzugt im Bereich von 0,5 bis 5 Gew.-% liegen, bezogen auf das Gewicht an Silicium-Verbindungen der allgemeinen Formel (I). Überraschende Vorteile lassen sich durch Mengen an saurem Katalysator im Bereich bevorzugt von 0,01 bis 5 Gew.-%, vorzugsweise 0,05 bis 3 Gew.-%, besonders bevorzugt 0,1 bis 2 Gew.-% und speziell bevorzugt 0,2 bis 1 Gew.-%, bezogen auf die in Schritt iii) erhaltene Mischung.

Die in Schritt iii) erhaltene Mischung umfasst 70 Gew.-% bis 99,79 Gew.-%, besonders bevorzugt im Bereich von 80 Gew.-% bis 99 Gew.-% und speziell bevorzugt 95 Gew.-% bis 99 Gew.-% Wasser.

Die Menge an Rheologie-Steuerungsmittel liegt vorzugsweise im Bereich von 0,1 Gew.-% bis 15 Gew.-%, besonders bevorzugt im Bereich von 0,5 Gew.-% bis 15 Gew.-% und speziell bevorzugt 1 Gew.-% bis 5 Gew.-%, bezogen auf das Gewicht der in Schritt iii) erhaltenen Mischung.

In Schritt iv) wird eine Hydrolysereaktion zumindest eines Teils der in Schritt iii) zugegebenen Silicium-Verbindung der allgemeinen Formel (I) durchgeführt. Hierdurch entsteht ein anorganisches Netzwerk, so dass die Reaktion auch als Polykondensation bezeichnet werden kann, durch die ein Kondensat erhalten wird. Der Anteil der Silicium, der in Schritt iv) umgesetzt wird, bezogen auf die in Schritt iii) zugegebene Menge, ergibt sich aus dem Umsatzgrad. Je nach Reaktionsführung und Partikelgröße werden üblich mindestens 40%, bevorzugt mindestens 80%, besonders bevorzugt mindestens 95% der in Schritt iii) zugegebenen Silicium-Verbindungen umgesetzt, so dass der Anteil der monomeren Silicium-Verbindungen der Formel (I) nach dem Hydrolyseschritt iv) höchstens 60 %, vorzugsweise höchstens 20%, besonders bevorzugt höchstens 5% bezogen auf das Gewicht der ursprünglich in Schritt iii) zugegebenen Silicium-Verbindungen, beträgt.

Die Hydrolyse erfolgt bevorzugt bei Temperaturen zwischen 0 und 130°C, vorzugsweise zwischen 15 und 40°C, wobei zur Durchführung der Reaktion bei hohen Temperaturen ein Überdruck angewandt werden kann.

Die Dauer der Hydrolysereaktion ergibt sich aus der Reaktivität der eingesetzten Silicium-Verbindung, dem pH-Wert sowie der Reaktionstemperatur. Im Allgemeinen kann die Reaktionsdauer so gewählt werden, dass ein Kondensat in der Zusammensetzung erhalten wird, welches in einer kolloidal-dispersen Form vorliegt.

Die Art des zu erzielenden Kondensats ist aus dem einleitend beschriebenen Stand der Technik an sich bekannt, wobei diese Druckschriften, jedoch die zuvor dargelegten Unterschiede, insbesondere die Verwendung von großen Mengen an Lösungsmitteln aufweisen. Weitere Hinweise hierzu finden sich in den Dokumenten DE 27 58 414, DE 27 58 415, DE 30 11 761, DE 38 26 715 und DE 38 35 968.

Ferner kann vorgesehen sein, dass die Schritte i), ii), iii) und iv) in der Reihenfolge i), ii), iii) und iv) durchgeführt werden

Der Anteil an SiO₂-Kondensat in der erfindungsgemäß erhältlichen Zusammensetzung liegt vorzugsweise im Bereich von 0,01 Gew.-% bis 10 Gew.-%, besonders bevorzugt im Bereich von 0,1 Gew.-% bis 5 Gew.-%. Dieser Anteil bezieht sich auf das Gewicht des SiO₂-Kondensats nach der Hydrolyse, ohne organische Bestandteile. Dieser Gehalt ergibt sich besonders einfach aus dem Gewicht einer durch einen Brennvorgang erhaltenen Schicht, bezogen auf das Gewicht vor dem Brennen.

Durch den Anteil an SiO₂-Kondensat in der Zusammensetzung kann beispielsweise die Schichtdicke der Antireflexionsbeschichtung eingestellt werden.

Überraschend kann die Wassermenge bei der Herstellung der Beschichtungszusammensetzung so gewählt wird, dass möglichst wenig überschüssiges Wasser abgetrennt werden muss. Bevorzugt müssen höchstens 20 Gew.-%, besonders bevorzugt höchstens 5 Gew.-% Wasser nach der Hydrolyse aus der Zusammensetzung abgetrennt werden. Gemäß einer besonders bevorzugten Ausführungsform wird nach der Hydrolyse kein Wasser abgetrennt. Weiterhin sind die Mengen an freigesetztem Alkohol oder anderen organischen Verbindungen, die aus den Silicium-Verbindungen durch die Hydrolyse entstehen, so gering, dass diese nicht abgetrennt werden müssen.

Gemäß einem besonderen Aspekt der vorliegenden Erfindung kann das Kondensat in der Zusammensetzung in einer kolloidal-dispersen Form vorliegen, in der das Kondensat partikelförmig in der Zusammensetzung vorhanden ist.

Ferner kann vorgesehen sein, dass dem Kondensat Partikel, vorzugsweise Kieselsole zugesetzt werden. Hierdurch können die Eigenschaften des Kondensats besonderen Erfordernissen angepasst werden. Bevorzugte Partikel, insbesondere Kieselsole können einen mittleren Partikeldurchmesser im Bereich von 1 bis 100 nm, vorzugsweise im Bereich von 3 bis 80 nm, besonders bevorzugt im Bereich von 5 bis 50 nm aufweisen. Der mittlere Partikeldurchmesser bezieht sich hierbei auf das Zahlenmittel und kann beispielsweise über mikroskopische Methoden ermittelt werden. Die Partikel umfassen vorzugsweise SiO₂, wobei der Gewichtsanteil an SiO₂ bevorzugt mindestens 50 Gew.-%, besonders bevorzugt mindestens 80 Gew.-% beträgt, bezogen auf das Gesamtgewicht der Partikel.

Der Anteil an nach Schritt iv) zugegebenen Partikeln kann vorzugsweise im Bereich von 0,01 bis 20 Gew.-%, bevorzugt im Bereich von 0,1 bis 10 Gew.-%,besonders bevorzugt im Bereich von 0,25 bis 5 Gew.-% liegen, bezogen auf das Gewicht der erfindungsgemäß erhältlichen Zusammensetzung.

Gemäß einer bevorzugten Ausführungsform wird die Hydrolysereaktion gemäß Schritt iv) ohne die Gegenwart von wirksamen Anteilen an Additiven, vorzugsweise oberflächenaktiven Stoffen durchgeführt. Zur Verbesserung der Eigenschaften der Antireflexschicht kann der erhaltenen Zusammensetzung nach der Hydrolysereaktion gemäß Schritt iv) ein Additiv, vorzugsweise oberflächenaktiver Stoff zugegebenen werden. Zu den bevorzugten oberflächenaktiven Stoffen gehören unter anderem nichtionische Tenside, anionische Tenside und kationische Tenside. Hierbei sind unter anderem Phosphorsäureester-Tenside und Silikontenside, vorzugsweise polyethermodifizierte Siloxane bevorzugt. Der HLB-Wert bevorzugter oberflächenaktiven Stoffe liegt im Bereich von 11 bis 19, besonders bevorzugt im Bereich von 12 bis 18, bestimmt gemäß Davies.

Der Anteil an oberflächenaktiven Stoffen in der erfindungsgemäß erhältlichen Zusammensetzung liegt vorzugsweise im Bereich von 0,005 Gew.-% bis 2 Gew.-%, besonders bevorzugt im Bereich von 0,05 Gew.-% bis 0,5 Gew.-%, bezogen auf das Gesamtgewicht der Zusammensetzung nach Zugabe des oberflächenaktiven Stoffs.

Die zuvor dargelegte Zusammensetzung, die nach dem erfindungsgemäßen Verfahren erhältlich ist, ist weiterhin Gegenstand der vorliegenden Erfindung. Hierbei zeichnet sich die Zusammensetzung insbesondere durch einen geringen Anteil an niedermolekularen organischen Verbindungen aus, der vorzugsweise höchstens 10 Gew.-%, besonders bevorzugt höchstens 5 Gew.-% und besonders bevorzugt höchstens 4 Gew.-% beträgt. Niedermolekulare organische Verbindungen weisen bevorzugt ein Molekulargewicht von höchstens 400 g/mol, vorzugsweise höchstens 200 g/mol und besonders bevorzugt höchstens 80 g/mol auf.

Zur Herstellung einer Antireflexbeschichtung wird die gemäß dem Verfahren erhältliche Zusammensetzung auf ein geeignetes Substrat aufgebracht. Für diese Beschichtung können übliche Beschichtungsverfahren Verwendung finden, z. B. Tauchen, Fluten, Ziehen, Gießen, Schleudern, Spritzen, Aufstreichen, Siebdruck oder Rollercoating. Hierbei sind Ziehverfahren, Flutverfahren und Gießverfahren, insbesondere das Vorhanggießen besonders bevorzugt.

Vor der Ausbildung der Antireflex-Eigenschaften kann die aufgetragene Zusammensetzung vorzugsweise (bei Raumtemperatur oder leicht erhöhter Temperatur) getrocknet werden. Bevorzugte Schichtdicken (im nassen Zustand) liegen bei 10 bis 50 µm, insbesondere 15 bis 25 µm.

Nach dem Auftragen der Zusammensetzung können die organischen Bestandteile, beispielsweise das Rheologie-Steuerungsmittel und die gegebenenfalls im Polykondensat vorhandenen Reste R, durch Erhitzen entfernt werden. Die dabei angewandten Temperaturen richten sich selbstverständlich nach der thermischen Stabilität der beschichteten Substrate und der zu entfernenden organischen Bestandteile. Es resultiert eine rein anorganische Antireflexionsbeschichtung, die thermisch stark belastbar ist. Das Erhitzen erfolgt vorzugsweise bei Temperaturen im Bereich von 500 °C bis 1000°C, besonders bevorzugt im Bereich von 550 bis 700°C. Der Brand kann in üblichen Flachglasbrenn- oder Härteöfen erfolgen.

Die erfindungsgemäße Zusammensetzung kann auf mineralische Gläser aufgetragen werden, um die Reflexion zu mindern. Die erfindungsgemäße Antireflexionsbeschichtung kann z. B. zur Entspiegelung und Erhöhung der Transmission von Kathodenstrahlröhren, Instrumentenanzeigen, Brillengläsern, Bildschirmen, Solarkollektoren, Fenstern, etc. eingesetzt werden.

Bevorzugte mit einer Antireflexionsbeschichtung versehene Substrate können beispielsweise eine Transmission von mindestens 95%, bevorzugt mindestens 96% aufweisen. Hierbei kann die Beschichtung sowohl einseitig als auch beidseitig aufgetragen werden, wobei ein beidseitiger Auftrag vielfach zu einer besonders hohen Transmission bzw. einer geringen Reflexion führt.

Nachfolgend wird die vorliegende Erfindung anhand von Beispielen näher erläutert, ohne dass hierdurch eine Begrenzung der Erfindung erfolgen soll.

### Beispiel 1

Herstellung einer Beschichtungszusammensetzung umfassend ein Polykondensat aus Tetraethoxysilan (TEOS).

Zu 46,766 g Wasser wurden 1,25 g Hydroxypropylcellulose (Nisso M erhältlich von Nisso Chemical Europe GmbH, Viskosität einer wässrigen Lösung mit 2 Gew.-% Nisso M beträgt ca. 150 bis 400 mPa•s, gemessen bei 20°C, Molekulargewicht beträgt ca. 620000 g/mol) zugegeben und 30 Minuten bei 30°C gerührt, um eine klare Lösung zu erhalten, in die in einem zweiten Schritt 0,25g HNO₃ beigefügt wurden. In die erhaltene Mischung wurden 1,734g Tetraethoxysilan eingerührt, wobei nach 18 Stunden bei 30°C eine klare Zusammensetzung erhalten wurde, die auf ein Glassubstrat aufgezogen wurde. Die Beschichtungszusammensetzung hatte bei einer Scherrate von 0,2s-1 eine Viskosität von 1,5Pa*s Nach dem Auftrag wurde die Beschichtung bei 120°C 10 Minuten getrocknet und 5 Minuten bei 600°C gebrannt. Es entstand eine dunkelblau reflektierende Antireflexschicht, die geringfügige Flecken aufwies.

### Beispiel 2

Das Beispiel 1 wurde im Wesentlichen wiederholt, wobei jedoch nach der Hydrolyse 0,1 Gew.-% eines oberflächenaktiven Stoffs (polyethermodifiziertes Siloxan, Byk 348 erhältlich von Byk Chemicals Japan) zugegeben wurde.

Es wurde eine dunkelblau reflektierende Antireflexschicht erhalten, die gegenüber der Schicht des Beispiels 1 weniger optische Fehler aufwies.

### Beispiel 3

Das Beispiel 1 wurde im Wesentlichen wiederholt, wobei jedoch vor der Hydrolyse 0,1 Gew.-% eines oberflächenaktiven Stoffs (Byk 348 erhältlich von Byk Chemicals Japan) zugegeben wurde.

Es wurde eine dunkelblau reflektierende Antireflexschicht erhalten, die gegenüber der Schicht des Beispiels 1 wesentlich mehr optische Fehler aufwies, wobei deutlich sichtbare Flecken entstanden.

### Vergleichsbeispiel 1

Zu 10 ml Wasser wurden drei Tropfen TEOS zugegeben, wobei die Silicium-Verbindung nicht in dem Wasser durch Rühren dispergiert werden konnte. Die Zugabe von 2 Tropfen HNO3 führte zur Bildung von weißen opaken Flöckchen, ohne dass die Entstehung einer zweckmäßigen Zusammensetzung beobachtet werden konnte.

### Beispiel 4

Zu 95,5 g Wasser, welches 0,263 g H₂SO₄ 50%-ig enthielt, wurden 2,2 g Hydroxypropylcellulose (Klucel L erhältlich von Hercules, Molekulargewicht beträgt ca. 95000 g/mol) zugegeben und 60 Minuten bei 30°C gerührt, um eine klare Lösung zu erhalten. In die erhaltene Mischung wurden 1,363 g Tetraethoxysilan eingerührt und für 60 Minuten hydrolysiert. In die erhaltene Mischung wurden 0,661 g Köstrosol 3550 eingerührt. Die erhaltene Zusammensetzung wurde mittels Siebdruck (Sieb 100T) auf Flachglas aufgebracht, wobei eine glatte Schicht entstand. Nach dem Auftrag wurde die Beschichtung bei 690°C gebrannt. Es entstand eine blau bis violett reflektierende Antireflexschicht.

## Patentansprüche

1. Verfahren zur Herstellung einer wässrigen Zusammensetzung umfassend ein Kondensat auf Basis von Silicium-Verbindungen, umfassend die Schritte:
i) Einbringen zumindest eines polymeren Rheologie-Steuerungsmittels in Wasser;
ii) Zugabe zumindest eines sauren Katalysators;
iii) Zugabe zumindest einer Silicium-Verbindungen der allgemeinen Formel (I)
RₙSiX₄₋ₙ (I),
in der die Reste X gleich oder verschieden sind und hydrolysierbare Gruppen oder Hydroxylgruppen bedeuten, die Reste R gleich oder verschieden sind und nicht hydrolysierbare Gruppen bedeuten und n 0, 1, 2 oder 3 ist; und
iv) Durchführung einer Hydrolysereaktion zumindest eines Teils der in Schritt iii) zugegebenen Silicium-Verbindungen der allgemeinen Formel (I),
wobei die Menge an Silicium-Verbindungen der allgemeinen Formel (I) im Bereich von 0,1 Gew.-% bis 5 Gew.-% beträgt, bezogen auf die in Schritt iii) erhaltene Mischung, und die in Schritt iii) erhaltene Mischung 70 Gew.-% bis 99,79 Gew.-% Wasser umfasst.

2. Verfahren gemäß Anspruch 1, **dadurch gekennzeichnet, dass** die Schritte i), ii), iii) und iv) in der Reihenfolge i), ii), iii) und iv) durchgeführt werden.

3. Verfahren gemäß Anspruch 1, **dadurch gekennzeichnet, dass** das Rheologie-Steuerungsmittel ein Molekulargewicht M_{w}, bestimmt gemäß der in der Beschreibung angegebenen Methode, im Bereich von 1000 bis 2000000 g/mol aufweist.

4. Verfahren gemäß mindestens einem der vorhergehenden Ansprüche, **dadurch gekennzeichnet, dass** zur Herstellung der Zusammensetzung in Schritt i) 0,1 Gew.-% bis 15 Gew.-% Rheologie-Steuerungsmittel eingesetzt werden, bezogen auf das Gewicht der in Schritt i) erhaltenen Mischung.

5. Verfahren gemäß mindestens einem der vorhergehenden Ansprüche, **dadurch gekennzeichnet, dass** Rheologie-Steuerungsmittel ein Polyacrylamid, Cellulose oder ein Cellulose-Derivat ist.

6. Verfahren gemäß mindestens einem der vorhergehenden Ansprüche, **dadurch gekennzeichnet, dass** mindestens eine Silicium-Verbindung der Formel SiX₄ eingesetzt wird, in der die Reste X gleich oder verschieden sind und hydrolysierbare Gruppen oder Hydroxylgruppen bedeuten.

7. Verfahren gemäß mindestens einem der vorhergehenden Ansprüche, **dadurch gekennzeichnet, dass** der Anteil der Silicium-Verbindung gemäß Formel SiX₄ im Bereich von 80 Gew.-% bis 100 Gew.-% liegt, bezogen auf die Gesamtmenge an monomeren Silicium-Verbindungen.

8. Verfahren gemäß mindestens einem der vorhergehenden Ansprüche, **dadurch gekennzeichnet, dass** der Anteil an niedermolekularen organischen Verbindungen höchstens 10 Gew.-% beträgt, bezogen auf das Gesamtgewicht der Zusammensetzung.

9. Verfahren gemäß mindestens einem der vorhergehenden Ansprüche, **dadurch gekennzeichnet, dass** ein oberflächenaktiver Stoff nach Durchführung des Schrittes iv) der Zusammensetzung zugegeben wird.

10. Zusammensetzung erhältlich nach einem Verfahren gemäß mindestens einem der vorhergehenden Ansprüche.

## Claims

1. Method for producing an aqueous composition comprising a condensate based on silicon compounds, comprising the steps of:
i) introducing at least one polymeric rheology control agent into water;
ii) adding at least one acidic catalyst;
iii) adding at least one silicon compound of formula (I)
RₙSiX₄₋ₙ (I),
in which the residues X are the same or different and represent hydrolyzable groups or hydroxyl groups, the residues R are the same or different and represent non-hydrolyzable groups, and n is 0, 1, 2 or 3; and
iv) performing a hydrolysis reaction of at least a portion of the silicon compounds of formula (I) added in step iii),
wherein the quantity of silicon compounds of the general formula (I) is in the range of 0.1 wt. % to 5 wt. % based on the mixture obtained in step (iii), and, wherein the mixture obtained in step (iii) comprises 70 wt. % to 99.79 wt. % water.

2. The method according to claim 1, **characterized in that** the steps i), ii), iii) and iv) are carried out in the sequence i), ii), iii) and iv).

3. The method according to claim 1, **characterized in that** the rheology control agent has a molecular weight Mw within the range of 1000 to 2000000 g/mol determined by the method as mentioned in the description.

4. The method according at least one of the preceding claims, **characterized in that** 0.1 wt. % to 15 wt. % rheology control agent based on the weight of the mixture obtained in step i) is used to produce the composition in step i).

5. The method according at least one of the preceding claims, **characterized in that** the rheology control agent is a polyacrylamide, a cellulose or a cellulose derivative.

6. The method according at least one of the preceding claims, **characterized in that** at least one silicon compound of the formula SiX₄ is used, in which the residues X are the same or different and represent hydrolyzable groups or hydroxyl groups.

7. The method according at least one of the preceding claims, **characterized in that** the proportion of the silicon compound according to the formula SiX₄ is within the range of 80 wt. % to 100 wt. %, based on the total quantity of monomeric silicon compounds.

8. The method according at least one of the preceding claims, **characterized in that** the proportion of organic compounds having a low molecular weight is no more than 10 wt. % based on the total weight of the composition.

9. The method according at least one of the preceding claims, **characterized in that characterized in that** after performing step iv) a surface active substance is added to the composition.

10. A composition obtainable by a method according at least one of the preceding claims.

## Revendications

1. Procédé de fabrication d'une composition aqueuse comportant un condensat à base de composés du silicium, comportant les étapes consistant à :
i) introduire dans de l'eau au moins un agent polymère de contrôle de la rhéologie ;
ii) ajouter au moins un catalyseur acide ;
iii) ajouter au moins un composé du silicium de la formule générale (1) :
RₙSiX₄₋ₙ (I),
dans laquelle les radicaux X sont identiques ou différents et signifient des groupes hydrolysables ou des groupes hydroxyle, les radicaux R sont identiques ou différents et signifient des groupes non hydrolysables et n est 0, 1, 2 ou 3 ; et
iv) conduire une réaction d'hydrolyse d'au moins une partie des composés du silicium de la formule générale (I) ajoutés à l'étape iii),
la quantité de composés du silicium de la formule générale (I) se situant dans la plage de 0,1 % en poids à 5 % en poids, par rapport au mélange obtenu à l'étape iii), et le mélange obtenu à l'étape iii) comportant 70 % en poids à 99,79 % en poids d'eau.

2. Procédé selon la revendication 1, **caractérisé par le fait que** les étapes i), ii), iii) et iv) sont conduites dans l'ordre i), ii), iii) et iv).

3. Procédé selon la revendication 1, **caractérisé par le fait que** l'agent de contrôle de la rhéologie présente une masse moléculaire M_{w}, déterminée selon la méthode indiquée dans la description, dans la plage de 1000 à 2000000 g/mol.

4. Procédé selon au moins l'une des revendications précédentes, **caractérisé par le fait que**, pour la fabrication de la composition à l'étape i), 0,1 % en poids à 15 % en poids d'agent de contrôle de la rhéologie sont utilisés, par rapport au poids du mélange obtenu à l'étape i).

5. Procédé selon au moins l'une des revendications précédentes, **caractérisé par le fait que** l'agent de contrôle de la rhéologie est un polyacrylamide, de la cellulose ou un dérivé de cellulose.

6. Procédé selon au moins l'une des revendications précédentes, **caractérisé par le fait qu'**au moins un composé du silicium de la formule SiX₄ est utilisé, dans lequel les radicaux X sont identiques ou différents et signifient des groupes hydrolysables ou des groupes hydroxyle.

7. Procédé selon au moins l'une des revendications précédentes, **caractérisé par le fait que** la proportion du composé du silicium selon la formule SiX₄ se situe dans la plage de 80 % en poids à 100 % en poids, par rapport à la quantité totale de composés du silicium monomères.

8. Procédé selon au moins l'une des revendications précédentes, **caractérisé par le fait que** la proportion de composés organiques de faible masse moléculaire est d'au plus 10 % en poids, par rapport au poids total de la composition.

9. Procédé selon au moins l'une des revendications précédentes, **caractérisé par le fait qu'**un agent tensioactif est ajouté à la composition après la conduite de l'étape iv).

10. Composition pouvant être obtenue par un procédé selon au moins l'une des revendications précédentes.
